Europäisches Patentamt

(19) European Patent Office

Office européen des brevets

(11) Veröffentlichungsnummer: **0 066 728**
**B1**

(12) **EUROPÄISCHE PATENTSCHRIFT**

(45) Veröffentlichungstag der Patentschrift:
25.09.85

(51) Int. Cl.⁴: **G 06 K 15/10**

(21) Anmeldenummer: **82104233.0**

(22) Anmeldetag: **14.05.82**

(54) Anordnung zur Aufbereitung von Rasterpunkt-Bildschirmdaten fur eine Druckausgabe.

(30) Priorität: 09.06.81 US 271911

(43) Veröffentlichungstag der Anmeldung:
15.12.82 Patentblatt 82/50

(45) Bekanntmachung des Hinweises auf die Patenterteilung:
25.09.85 Patentblatt 85/39

(84) Benannte Vertragsstaaten:
DE FR GB IT NL SE

(56) Entgegenhaltungen:
EP - A - 0 012 858
DE - A - 2 415 320
GB - A - 2 023 317
US - A - 3 764 994
US - A - 4 158 203

(73) Patentinhaber: International Business Machines
Corporation, Old Orchard Road, Armonk, N.Y. 10504 (US)

(72) Erfinder: Galetto, Louis Valentine, 26E Jane Lacy Dr.,
Endicott New York 13760 (US)
Erfinder: Ross, Charles Owen, 2111 Tracy St., Endicott
New York 13760 (US)

(74) Vertreter: Blutke, Klaus, Dipl.-Ing., Schönaicher
Strasse 220, D-7030 Böblingen (DE)

## Beschreibung

Die Erfindung betrifft eine Anordnung zur Aufbereitung von seriellen Rasterpunkt-Zeilen-Daten für ein Bildschirmgerät mit einer aus mehreren Rasterpunkt-Zeilen bestehenden Bildfläche zur Ausgabe durch einen Matrixdrucker auf einen Aufzeichnungsträger.

Durch die Erfindung soll es ermöglicht werden, eine gedruckte Aufzeichnung (Hartkopie) einer Rasterpunkt-Bildschirmdarstellung (z.B. bei computergesteuerten Kathodenstrahlröhren-Bildschirmgeräten) zu erhalten.

Die Daten haben die Form binärer Bits und steuern das Dunkeltasten des Elektronenstrahles, der wiederholt Zeile für Zeile über die Bildschirmfläche der Kathodenstrahlröhre läuft. Jedes Bild besteht aus einer Matrix fluoreszierender Punkte, von denen jeder das Vorhandensein eines binären Bits darstellt. Die Quellendaten kommen im allgemeinen von einem Speicher mit wahlfreiem Zugriff, damit das Bild so oft wie erforderlich generiert werden kann.

Wegen ihrer relativ geringen Arbeitsgeschwindigkeit benötigen Drucker einen Pufferspeicher, in den binäre Daten von der Datenquelle zur späteren Druckausgabe eingelesen und vorübergehend gespeichert werden. Die Bilddaten können entweder vom Speicher der Bildschirmeinheit oder direkt vom «Videoeingang» des Bildschirmgerätes kommen (mit Video-Daten sollen im folgenden die Rasterpunktdaten des Bildschirmgerätes bezeichnet sein).

Pufferspeicher für Drucker benutzten bisher zwei Techniken, um die Bitdaten für das Bild festzuhalten. Dabei wurden entweder Zeichencodes von der Bildschirmeinheit an einen Zeichengenerator für den Drucker gesendet und die Information aufgezeichnet oder es wurde jede Abtastlinie festgehalten und einzeln der Reihe nach aufgezeichnet. Die erste Technik hat den Vorteil, dass die Bildschirmeinheit nur für ganz kurze Zeit gebunden ist. Bei diesem Verfahren wird jedoch ein grösserer Pufferspeicher benötigt, da mehr Bits gleichzeitig im Speicher festgehalten werden müssen. Die zweite Technik verlangt einen Speicher für nur eine Bitabtastzeile, der Drucker muss aber jede Zeile drucken, bevor die nächste gelesen und gespeichert werden kann. Die Benutzung der Bildschirmeinheit wird somit verzögert, bis alle Zeilen der Reihe nach gedruckt sind. Ein Beispiel für diese Technik zeigt das in der US–Patentschrift 4 158 203 beschriebene System; die Zeilenlänge des Druckers muss genau so gross sein wie die einer vollen Rasterpunkt-Zeile, im allgemeinen also mehrere hundert Elemente.

Es ist Aufgabe der Erfindung, eine Anordnung anzugeben, die es gestattet Rasterpunkt-Bildschirmdaten für eine kosten- und zeitgünstige Druckausgabe aufzubereiten.

Diese Aufgabe wird in vorteilhafter Weise dadurch gelöst, dass der Matrixdrucker in an sich bekannter Weise einen Schreibkopf mit einer linken und einer rechten Spalte mit jeweils äquidistant angeordneten Druckelementen aufweist, wobei die Druckelementenspalten so gegeneinander versetzt sind, dass bei einem Aufzeichnungsvorgang, bei dem der Schreibkopf und der Aufzeichnungsträger relativ zueinander in einem zeilenförmigen Durchlauf bewegt werden, jedes Druckelement eine von p Punktrasterdruckzeilen mit je n Rasterpunkten druckt, dass ein wahlfrei adressierbarer Speicher zur Aufbereitung der Druckdaten vorgesehen ist, dass der Speicher in einen der linken Druckelementenspalte zugeordneten Bereich und in einen der rechten Druckelementenspalte zugeordneten Bereich aufgeteilt ist, dass jeder Speicherbereich in aufeinanderfolgende Felder aufgeteilt ist, von denen jedes Feld einer Druckposition des Schreibkopfes auf dem Aufzeichnungsträger für einen Aufzeichnungs-Durchlauf zugeordnet ist, dass jedes Bit eines Feldes einem bestimmten Druckelement zugeordnet ist, dass nacheinander mikroprozessor- und zählergesteuert aus jeder k-ten Bildschirmzeile (k = 1, 2, 3, 4 bis n) p Rasterpunkte ausgewählt und in ein Register (53 A, 53 B) mit p Stufen übertragen werden, wobei jede Registerstufe einem Druckelement zugeordnet ist, um so für jede der dem Schreibkopf für einen Aufzeichnungs-Durchlauf zugeordneten und später aufzuzeichnenden Punktrasterdruckzeilen die jeweils k.te Bit-Information zu bilden, dass der Inhalt der Registerstufe taktgesteuert über Torschaltungen für jede Druckelementenspalte getrennt in die einzelnen Felder der Speicherbereiche übertragbar ist, dass nach dem Laden der Speicherbereiche mit Druckdaten für einen Aufzeichnungs-Durchlauf für jede Druckposition die Druckdaten für die linke und rechte Druckelementenspalte aus den einer Druckposition entsprechenden Feldern der Speicherbereiche abrufbar sind und dass dieser Aufbereitungsvorgang für die nächsten p Rasterpunkte der Bildschirmzeilen wiederholbar ist bis alle Bildschirmrasterpunkte abgedruckt sind.

Vorteilhafte Weiterbildungen der Erfindung sind den abhängigen Ansprüchen zu entnehmen.

Zu den verschiedenen Vorteilen der Erfindung gehört die Möglichkeit, die Anzahl der Rasterpunktzeilen in einem Bild und die Anzahl der Rasterpunkte in jeder dieser Zeilen während einer Einstellroutine durch den Mikroprozessor zu bestimmen. Das Aufzeichnungsgerät lässt sich so unterschiedlichen Bild-Formaten anpassen und kann deshalb auch für verschiedene Bildschirmgeräte verwendet werden. Letztere sind nicht nur auf Kathodenstrahlbildschirmgeräte beschränkt, es können auch Gastafeln oder andere Geräte verwendet werden, in denen die Daten in Matrixform angezeigt werden. Die Anzahl der Rasterpunktzeilen kann gerade oder ungerade sein; zur Wiedergabe nicht benötigte Druckelemente werden automatisch leer «getastet». Ein spezieller Anschlussadapter für den Drucker an eine bestimmte Bildschirmeinheit ist nicht erforderlich, da das Aufzeichnungsgerät direkt alle zur Bildschirmwiedergabe erforderlichen Signale verarbeitet.

Ein Ausführungsbeispiel der Erfindung ist in den Zeichnungen dargestellt und wird im folgenden näher beschrieben.

Es zeigen:

Fig. 1 eine schematische Darstellung eines Bildschirmes mit einem Rasterpunktbild (Videobild),

Fig. 2 eine schematische Darstellung des Videobildes nach Fig. 1 in der Aufzeichnung als Hart-Kopie,

Fig. 3 ein Blockschaltbild der erfindungsgemässen Schaltung zum Speichern von Daten der Rasterpunktzeilen eines Videobildes,

Fig. 4 ein Blockschaltbild mit einem Bitspeicher zur Druck-Wiedergabe der durch die in Fig. 3 gezeigten Schaltung gespeicherten Daten.

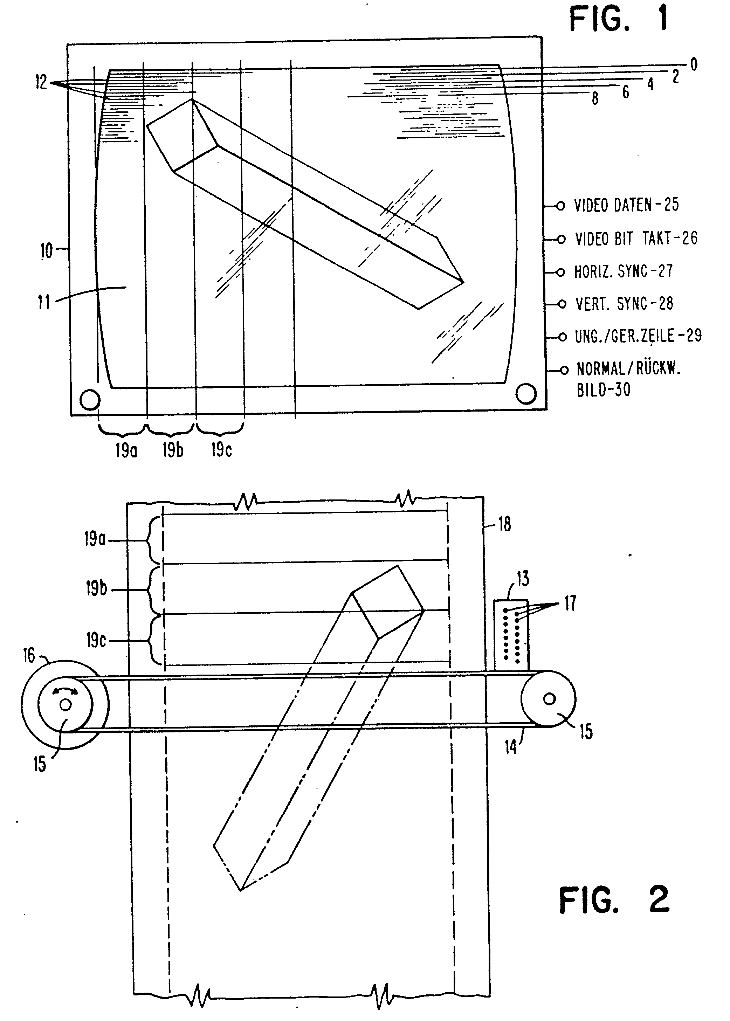

In Fig. 1 ist eine herkömmliche Bildschirmstation 10 mit Kathodenstrahlröhre gezeigt, auf deren Vorderseite der Datenrahmen 11 angezeigt wird. Der Datenrahmen besteht aus mehreren horizontalen Rasterpunktzeilen 12, die in Fig. 1 angedeutet und von oben nach unten mit 0–8 numeriert sind. Das ganze Bild umfasst typischerweise 525 Zeilen. Während der Elektronenstrahl über die Vorderseite der Bildröhre geführt wird, wird er für jeden Schritt auf seiner Bahn entsprechend einer Punktstelle hell oder dunkel getastet. Die Anzahl der Punktstellen oder Datenbitpositionen in jeder Abtastzeile hängt von der Art der Bildschirmeinheit ab, liegt jedoch typischerweise bei etwa 800. Wenn der Strahl hell getastet wird, ist auf der Bildschirmfläche ein phosphoreszierender Punkt von ungefähr 0,25 mm Durchmesser zu sehen; Zeichen oder Figuren setzen sich aus mehreren an vorgegebenen Stellen erscheinenden Punkten zusammen. Ein Datenrahmen besteht aus verschachtelten Abtastzeilen: die geradzahligen Zeilen null, zwei, vier usw. werden zuerst erzeugt und dann die ungeradzahligen eins, drei, fünf usw. Da die Nachleuchtdauer der phosphoreszierenden Punkte nur von kurzer Dauer ist, wird ein angezeigter Datenrahmen wiederholt regeneriert, und zwar im allgemeinen 60 mal pro Sekunde.

Wenn eine Kopie der Bildschirmanzeige gemäss Fig. 2 gefordert wird, so kann eine solche durch einen Matrixdrucker erzeugt werden, der die auf dem Bildschirm angezeigten binären Punkte ausdruckt. Der Drucker ist schematisch als Druckkopf 13 dargestellt, der auf einer Druckzeile durch den Riemen 14 hin und her bewegt wird. Dieser Riemen läuft über die Rollen 15, die von einem Motor 16 angetrieben werden. Der Druckkopf hat selektiv erregbare Druckdrähte oder Elektroden 17 zur Aufzeichnung auf dem Papier 18. Die Elektroden sind in zwei gegeneinander versetzten vertikalen Spalten angeordnet, die auf der Druckzeile einen Abstand von zwei Punktpositionen voneinander haben. Der Druckkopf des Druckers eignet sich zum Druck in beiden Richtungen und verfügt über insgesamt 16 Elektroden, die für jede Spaltendruckposition zwei jeweils acht Bit grosse Datenbytes brauchen.

Bei jedem Durchlauf des Druckkopfes über den Aufzeichnungsträger werden also 16 Punktzeilen aufgezeichnet. Der beschriebene Matrixdrucker kann als Elektroerosionsdrucker auf metallisiertes Papier drucken, es können jedoch auch Anschlagdrucker oder Thermodrucker verwendet werden, auch mit einer anderen Anzahl von Elektroden oder mit nur einer Druckrichtung.

Erfindungsgemäss erhält man die Daten für die Elektroden 17 dadurch, dass man von der zur Bildschirmstation 10 führenden Datenleitung für jede horizontale Rasterpunktzeile gleiche Segmente festhält. Jedes Segment umfasst je ein Datenbit für jede Elektrode, so dass im gezeigten Beispiel für 16 Elektroden 16 Bits benötigt werden. In diesem Beispiel werden binäre Daten angenommen, bei denen entweder ein Datenbit vorhanden ist oder nicht (eine Grauskala gibt es nicht). Jedes Datensegment für den 16 Elektroden umfassenden Schreibkopf besteht aus zwei jeweils 8 Bits umfassenden Bytes. Es wird zur späteren Druckausgabe zunächst gespeichert. Die Folge mehrerer Segmente wird durch die Bänder 19a, 19b, und 19c des in Fig. 2 gezeigten Rahmens dargestellt. Wenn die Daten an den Druckkopf geliefert werden, während dieser sich quer über das Papier 18 bewegt, werden die Datenbytes spaltenweise an die Elektroden gegeben. Die Segmentbänder werden gegenüber dem Originalbild um 90° gedreht gedruckt. Die obere linke Ecke des Bildes wird so zur oberen rechten Ecke in der Kopie (entsprechend der Verlaufrichtung des Aufzeichnungsstrahls und der Druckrichtung).

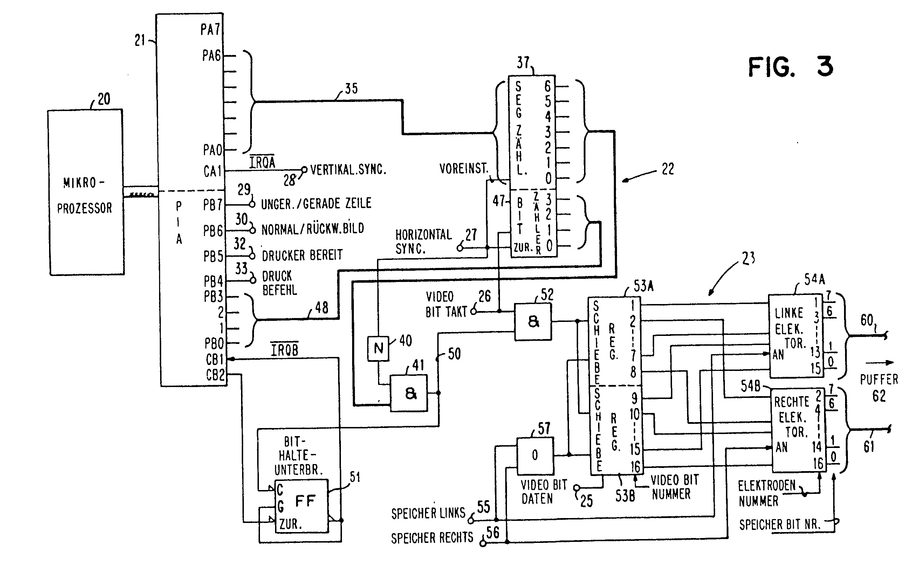

In Fig. 3 ist eine Schaltung zum Auswählen der Bits eines jeden Rasterpunktzeilensegmentes gezeigt. Sie umfasst einen Mikroprozessor 20, einen Peripherie-Schnittstellenadapter (PIA) 21, eine Datenbit-Fangschaltung 22 und einen Teil einer Datenspeicherschaltung 23. Als äussere Anschlüsse sind an der Bildschirmeinheit die Anschlüsse für das Video-Datensignal 25, das Videobit-Taktsignal 26, das horizontale Synchronisationssignal 27, das vertikale Synchronisationssignal 28 und das Signal für gerade/ungerade Zeilen 29 vorhanden. Auf Wunsch steht auch noch das Rückwärtsdrucksignal 30 zur Verfügung. Diese Signale sind bei handelsüblichen Bildschirmgeräten allgemein üblich und brauchen daher nicht näher beschrieben zu werden. Steuersignalanschlüsse für den Drucker sind die Anschlüsse für das Druckerbereitschaftssignal 32 und das Druckbefehlssignal 33, die beim Drucken zusätzlich zu den Datenbitsignalen an die Druckelektroden gegeben werden.

Bei dem Mikroprozessor 20 kann es sich um jedes handelsübliche Gerät mit einer Kapazität von 8 oder 16 Bit handeln. Hier ist ein 8 Bit grosses Gerät beschrieben wie beispielsweise das Modell M68AOO von der Motorola Corporation. Es arbeitet in Verbindung mit dem Peripherie-Schnittstellenadapter 21, der ebenfalls als Modell M6821 von der Motorola Corporation zur Verfügung steht. Zum Mikroprozessorsystem gehören ausserdem ein Festwertspeicher und ein Speicher mit wahlfreiem Zugriff (Randomspeicher).

Jeder der Anschlüsse PA0–PA6 des Peripherie-Schnittstellanadapters 21 (PIA) ist über Adern in der Sammelleitung 35 mit den entsprechenden Stufen 0–6 im binären Segmentzähler 37 verbunden. Dadurch kann vom Mikroprozessor 20 eine Zahl über den PIA 21 in den Segmentzähler 37 gelesen werden. Die Ausgangsanschlüsse des binären Segmentzählers 37 sind mit einem 7 Eingänge aufweisenden UND-Glied 41 verbunden, das durch ein Einschaltsignal über den Inverter 40 vom horizontalen Synchronisationssignal 27 eingeschaltet wird. Ein zweiter vierstufiger Binärzähler, der Bitzähler 47, wird vom Videobittaktsignal 26 heruntergezählt und läuft nach jeweils 16 Bits in die Nullstellung über. Die Ausgangswerte des Bitzählers 47 können über den PIA 21 an den Anschlüssen PB0–PB3 bei Bedarf über die bidirektionale Sammelleitung 48 in den Mikroprozessor ausgelesen werden. Durch jedes horizontale Synchronisationssignal 27 wird der Bitzähler zurückgestellt, und wenn er die Nullstellung durchläuft, setzt er jedes Mal den Segmentzähler 37 um eins herunter. Vorher muss der Segmentzähler 37 aber durch das horizontale Synchronisationssignal auf den Wert vom PIA 21 voreingestellt sein. Die Arbeitsweise dieser beiden Zähler wird später noch genauer beschrieben.

Wenn alle Stufen des binären Segmentzählers 37 Null anzeigen liefert das UND-Glied 41, das durch das Fehlen des horizontalen Synchronisationssignales vorbereitet wurde, ein Ausgangssignal auf die Leitung 50, die mit einem Bit-Halte-Unterbrechungsflipflop 51 und einer Torschaltung 52 verbunden ist. Das Flipflop 51 wird durch ein Signal auf der Leitung CB2 vom PIA 21 zurückgestellt gehalten, bis in die Nähe der Bithaltezeit, wenn das Rückstellsignal zurückgenommen wird. Ein Signal auf der Leitung 50 vom UND-Glied 41 schaltet also das Bit-Halte-Unterbrechungsflipflop 51 ein, nachdem das Signal vom Anschluss CB2 am PIA 21 weggenommen wird. Dadurch wird das Vorhandensein eines «Fensters» angezeigt, das das Festhalten von Datenbits von einem Rasterpunktzeilensegment gestattet.

Die durch das Ausgangssignal vom UND-Glied 41 vorbereitete Torschaltung 52 gestattet den Videobittaktimpulsen am Anschluss für das Videobit-Taktsignal 26 die Videobitdaten am Anschluss für das Video-Datensignal 25 durch die Teile A und B des Schieberegisters 53 weiterzuleiten. Das Schieberegister hat eine Kapazität von sechzehn Bits ebenso wie der Bitzähler 47, so dass der Segmentzähler 37 heruntergesetzt wird, wenn der Bitzähler 47 nach dem sechzehnten Bit den Wert Null erreicht, wodurch das Signal vom UND-Glied 41 auf der Leitung 50 abgenommen und die Torschaltung 52 gesperrt wird. Somit kann für einen Schreibkopfdurchlauf ein Segment von 16 binären Bits in den Schieberegisterstufen festgehalten werden.

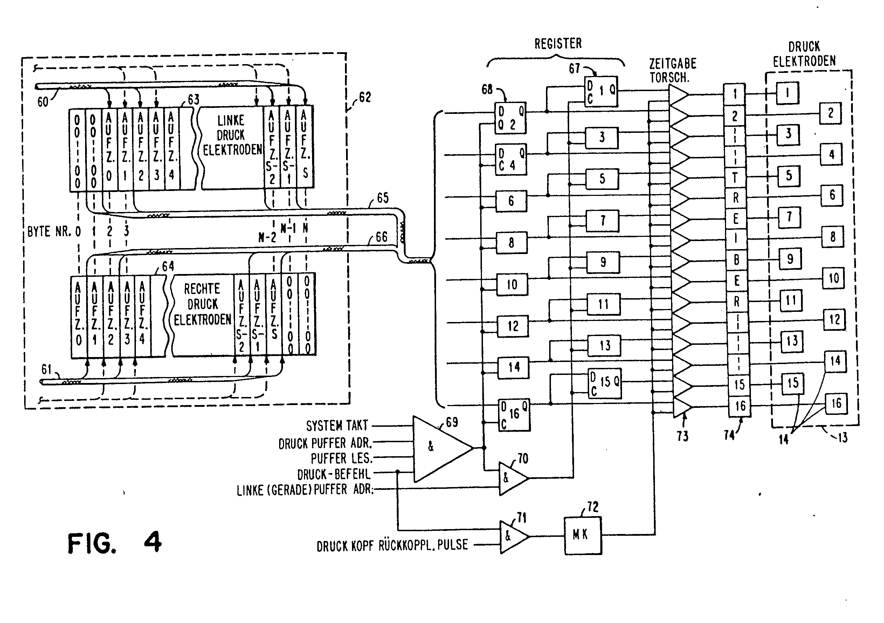

Wie aus Fig. 2 zu ersehen ist, sind die Schreibkopfelektroden in zwei parallelen Spalten von je 8 Elektroden gegeneinander versetzt angeordnet. Die Elektroden in der linken und rechten Reihe haben voneinander einen Abstand von 2 Rasterpunkten. Deswegen müssen die Daten im Schieberegister 53 (Fig. 3) vor der Speicherung im Speicher in zwei Bytes von je acht Bits aufgeteilt werden. Die Bytes für die linken und rechten Elektrodenreihen werden in Fig. 3 aufgeteilt durch Verbindung mit zwei entsprechenden 3-Status-Torschaltungs-Gruppen 54A und B. Die ungeradzahligen Stufen im Schieberegister 53A und B sind mit den entsprechenden Toren für die linken Elektroden und die geradzahligen Stufen des Schieberegisters mit acht Toren für die rechten Elektroden verbunden. Wenn Bitdaten durch die Tore übertragen werden sollen, werden ein linkes und ein rechtes Speicherlesesignal an die Anschlüsse 55 und 56 angelegt. Jedes dieser vom ODER-Glied 57 kommenden Signale sorgt für das Auslesen aus den Schieberegistern 53A oder B. Die Ausgangssignale von den Torschaltungen 54A und 54B erscheinen als Eingänge auf den in Fig. 4 gezeigten Druckpuffer-Sammelleitungen 60, 61, die zum Druckpuffer 62 führen.

In Fig. 4 ist dargestellt, wie die von den Rasterpunktzeilen erhaltenen Segmentdaten gespeichert und hinterher an die Schreibelektroden des Druckkopfes weitergegeben werden. Das Byte für die 8 linken Elektroden wird auf die Druckpuffer-Sammelleitung 60 gegeben, das Byte für die rechten Elektroden auf die Druckpuffer-Sammelleitung 61. Diese Sammelleitungen sind an zwei Abschnitte 63 und 64 im Druckpuffer 62 angeschlossen. Die 8 Bits umfassenden Bytes werden an Adressen des Speichers gesendet, die nicht sequentiell aufeinanderfolgen, da die Daten nicht der Reihe nach für jede Rasterpunktzeile, sondern abwechselnd für gerade und ungerade Zeilen festgehalten werden. Betrachtet man das erste Segment von 16 Bits für den ersten Schreibkopfdurchlauf, so wird das erste Byte für die rechten Elektroden in eine vorher zugeordnete Speicherstelle gesetzt, die z.B. bezeichnet ist mit Position 0 im Abschnitt 64; das entsprechende Byte für die linken Elektroden wird in die Position, z.B. 0, in den Abschnitt 63 gesetzt. Diese Stelle wird so gewählt, dass sie zwei Adressierungszeiten später ausgelesen wird, wenn die Daten vom Drucker aufzuzeichnen sind.

Die Versetzung ist zur Berücksichtigung der voneinander beabstandeten linken und rechten Elektrodenspalte erforderlich. Da die linken Elektroden zwei Bit-Zeiten hinter den rechten Elektroden bei einem Schreibgang von links nach rechts liegen, müssen die an die linken Elektroden gelieferten Daten Leerstellen sein. Entsprechend sind die Rasterpunktzeilendaten, die durch die verschiedenen Bezeichnungen (Aufzeichnung 0, 1, 2, 3 ...) in den Abschnitten 63 und 64 angegeben sind, um zwei Adressen versetzt. Zum Schreiben in der Gegenrichtung muss natürlich am entgegengesetzten Ende der Abschnitte eine Versetzung vorgesehen werden. So werden also in die ersten beiden Adressen des Abschnittes 63 und in die letzten beiden Adressen des Abschnittes 64 Nullen als Daten gesetzt, um sicherzustellen, dass die entsprechenden Elektroden nicht drukken, wenn die Speicheradresse für die 16 Bits angesprochen wird.

Das Auslesen erfolgt über die Sammelleitungen 65 und 66 an die Registergruppen 67 und 68. Jede Bitspeicherzelle in der Registergruppe umfasst ein Flipflop mit einer der Nummer der Druckelektrode am Druckkopf 13 entsprechenden Nummer. Die Flipflops in den Registern werden eingeschaltet unter Steuerung verschiedener an der Torschaltung 69 anliegender Druckersteuersignale wie z.B. des Taktsignales, des die Adressierung des Druckpuffers 62 anzeigenden Signales, eines Pufferlesesignales und des Druckbefehlsignales. Wenn diese Signale zusammen auftreten, wird die erste Registergruppe eingeschaltet, damit die Daten vom Byte 0 des Speicherabschnittes 63 die Flipflops entsprechend einschalten können. Da die ersten beiden Druckpuffer-Lesezyklen jedoch von einer geraden Speicheradresse für die linken Elektroden kommen, wird auch die linke Elektrodentorschaltung 70 voll vorbereitet, und ihr Ausgangssignal wiederum schaltet die Flipflops der Registergruppe 67 ein.

Die Daten für das erste 8 Bit grosse Byte werden in den Flipflops der beiden Registergruppen 67 und 68 gespeichert. Die Pufferadresse für die rechten Druckelektroden für die Aufzeichnung 0 wird angesteuert, die Datenübertragung erfolgt auf der Auslesesammelleitung 66 wobei die entsprechenden Flipflops in der Registergruppe 68 eingeschaltet sind. Die Torschaltung 70 für die linken Elektroden wurde in der Zwischenzeit durch das Fehlen des «linken» Pufferadresssignales geschlossen. Beim Auftreten des Druckkopf-Rückkopplungs-Pulses, der typischerweise in den Druckern für jede Spalte gedruckter Punkte erzeugt wird, wird in Verbindung mit dem Druckbefehlsignal an der Torschaltung 71 die monostabile Kippschaltung (MK) 72 erregt, die wiederum ein entsprechendes UND-Glied 73 für jedes der Registerflipflops vorbereitet. Die gespeicherten Registersignale veranlassen dann die Treiber 74 zur Erregung einer der Druckelektroden 1 bis 16. Nachdem der Speicher vollständig ausgelesen und dessen Inhalt während eines Zeilendurchlaufes des Druckkopfes ausgedruckt wurde, wird der Aufzeichnungsträger vorgeschoben, die Information für den nächsten Durchlauf wird festgehalten und anschliessend in der Gegenrichtung ausgedruckt.

Zum Festhalten der Datensegmente des Schirmbilds muss die Anzahl der Bits (oder Punkte) pro Rasterpunktzeile und die Anzahl der Rasterpunktzeilen pro Bild für ein bestimmtes Bildschirmgerät bekannt sein, um die Bildgrenzen für den Aufzeichnungsträger definieren zu können.

Diese Information steht zur Verfügung, wenn die Stromversorgung für das Bildschirmgerät aktiviert ist. Die Anzahl der Punkte pro Rasterpunktzeile wird errechnet durch Abzählen der Anzahl ganzer 16 Bit grosser Segmente zuzüglich eines Restes für das letzte Segment. Danach wird die Anzahl der Rasterpunktzeilen durch Zählen der Anzahl gerader oder ungerader Zeilen und durch Addition der Anzahl entgegengesetzter Aufzeichnungen ermittelt. Tatsächlich werden die Zeilenläufe eines jeden Typs halbiert und der Rest wird festgehalten zur Bildung von vier Werten, die zum Festhalten der Bilddaten benutzt werden.

Die Anzahl von 16 Bitsegmenten in einer Rasterpunktzeile wird bestimmt mit Hilfe einer binären Standardsuchroutine, in der eine Versuchslösung in der Mitte zwischen zwei Grenzwerten gesucht wird. In diesem Fall wird der erste Versuchswert von 63 in den binären Segmentzähler 37 in Fig. 3 gesetzt, indem man einen Mittelwert zwischen den an den Anschlüssen PA0 bis PA6 des PIA 21 möglichen Minimums (0) und Maximums (127) bildet. Wenn dieser Wert beim nächsten horizontalen Synchronisationssignal am Anschluss 27 gesetzt wird, setzt jeder Videobittaktimpuls am Anschluss 26 den Inhalt des Bitzählers 47 herunter, und jeder Nulldurchgang (oder nach jeweils 16 Bits) setzt den Inhalt des Zählers 47 ebenfalls um eins herunter. Wenn man beispielsweise annimmt, dass 800 Bits in einer Rasterpunktzeile liegen, dann werden 50 Segmente gebraucht; um das Ende einer Zeile darzustellen, muss jedoch die Stellung des Bit-Halte-Unterbrechungsflipflops 51 durch ein Signal vom Nullausgang des binären Segmentzählers 37 durch das UND-Glied 41 umgeschaltet werden. Um manchmal ein Teilsegment als letztes Segment verarbeiten zu können, muss die letzte Segmentzahl 49 sein (0 ist eine gültige Segmentzahl) zuzüglich einiger extra Bits. Aus dieser Forderung folgt, dass der Zähler 37 mit seinem Wert 63 nicht den Wert Null erreicht. Daher wird eine übersteuernde Verzögerung eingeschaltet, um den nächsten Zählwert von 127 auf 63 zu ändern. Der nächste vertikale Synchronisationsimpuls setzt dann den Wert 31 in den Segmentzähler 37 als Durchschnittswert von 63 und 0. Da 50 Segmente vorhanden sind, zählt der Zähler 37 auf 0 herunter und das UND-Glied 41 ändert den Zustand des Bit-Halte-Unterbrechungsflipflops 51 und erzeugt eine Unterbrechung am Anschluss CB1 des PIA 21. Dadurch wird eine Zahl im Bitzähler 47 gespeichert und weitere Unterbrechungen werden bis nach dem Auftreten des nächsten vertikalen Synchronisationssignales gesperrt; die Verzögerung wird auf einen negativen Wert gesetzt. Danach wird der Mindestwert auf 32 oder um 1 mehr als der Wert der in den Segmentzähler 37 gesetzten Zahl angehoben. Wenn eine Unterbrechung auftritt, werden die Mindestwerte angehoben, und wenn nicht, werden die Höchstwerte gesenkt. Nachfolgende Versuche mit den Durchschnittswerten von Minimum- und Maximum-Werten setzen den Inhalt des Segmentzählers 37 auf die Werte 47, 55, 51, 49, 50 und schliesslich 49. Die binäre Suchroutine wird dann beendet und die im Bitzähler 47 verbleibende Zahl wird im Speicher sichergestellt. In dem speziellen Beispiel sind die zusätzlichen Punkte 0.

Bei den Rasterpunktzeilen werden geradzahlige und ungeradzahlige Zeilen gezählt. Jede Zeilengruppe kann zuerst gezählt werden. Der Segmentzähler 37 wird zum Festhalten des ersten Bitsegmentes einer jeden Zeile auf 0 gesetzt. Da jedes horizontale Synchronisationssignal den Segmentzähler 37 auf 0 setzt, schaltet das Bit-Halte-Unterbrechungsflipflop 51 um, und diese Umschaltung wird bei CB1 am PIA 21 abgefühlt und gezählt. Diese Zustandsänderungen werden gezählt und gespeichert, bis bei PB7 PIA 21 eine Änderung der Ungerade/Gerade-Abtastung auftritt. Die gesammelte Zahl wird dann durch 2 dividiert und die Werte mit einem eventuellen Rest gespeichert. Zählen, Dividieren und Speichern werden dann für die andere Feldgruppe wiederholt. Diese zwei Zahlen liefern zur weiteren Steuerung eine Zeilenzahl. Jede Zahl wird dividiert, weil während des Bit-Haltens von Daten die Speicherung der «festgehaltenen» Daten das System daran hindert, das Segment von der nächsten Zeile aus Zeitmangel zu holen. Es werden also für die geradzahligen und für die ungeradzahligen Zeilen jeweils zwei Abtastungen benötigt. Die Zeilen 0, 4, 8 usw. und 2, 6, 10 usw. werden festgehalten und dann werden die Zeilen 1, 5, 9 usw. und 3, 7, 11 usw. festgehalten, wenn die geradzahligen Zeilen zuerst auftreten. Dann können die Bilddaten festgehalten werden.

Ein Segment von 16 Bits wird festgehalten, indem man die Zahl 0 in den binären Segmentzähler 37 und in den Bitzähler 47 setzt, wenn ein Gerade/Ungerade-Zeilensignal, ein vertikales Synchronisationssignal und ein horizontales Synchronisationssignal auftreten. Diese Signale zeigen an, dass ein neues Zeilenfeld regeneriert werden muss. Das Rücksetzen der Zähler 37 und 47 auf 0 schaltet die Torschaltung 51 ein und bei eingeschalteten Lesesignalen öffnet die Torschaltung 52 die Schieberegister 53A und 53B zum Speichern von 16 Videodatenbits für die nächsten 16 Videotaktsignale. Der Inhalt des Segmentzählers 37 wird dann heruntergesetzt, ist also nicht mehr 0, so dass die Torschaltungen 50 und 52 gesperrt sind. Die Schieberegisterdaten werden dann durch die Torschaltungen 54A und 54B als gerade und ungerade Bits für die Druckelektroden und zum späteren Gebrauch gespeichert.

Das nächste horizontale Abtast-Synchronisationssignal setzt Nullen in die Zähler 37 und 47 und die ersten 16 Bits für die nächste Zeile werden festgehalten und gespeichert. Wie bereits gesagt wurde, werden Segmente abwechselnder gerader und ungerader Rasterpunktzeilen während jedes Geraden/Ungeraden-Zeilenfeldes festgehalten. Um die ersten 16 Bits einer jeden Zeile eines Bildes zu bekommen, braucht man also 4 Abtastfelder.

Das zweite Segment in jeder Zeile wird dadurch festgehalten, dass man den Inhalt des Zählers 37 auf eins und den des Bitzählers 47 auf Null setzt, wenn das horizontale Synchronisationssignal auftritt. Dazu müssen die ersten 16 Bits umgangen werden, bis der Zähler 37 den Wert 0 erreicht, wenn die Torschaltungen 50 und 52 geöffnet werden. Das Verfahren wird für alle Zeilen wiederholt, wobei der Inhalt des Segmentzählers für jede Zeile auf 1 gesetzt wird, während die Daten festgehalten werden. Durch diese Technik werden die zweiten Segmente der Zeilen festgehalten und gespeichert. Der Zähler 37 muss natürlich auf immer höhere Zahlen voreingestellt werden, um verschiedene Bänder über dem Videobild festzuhalten. Nachdem jede Segmentfolge 0, 1, 2 usw. festgehalten wurde, werden die 16 Bit breiten Bänder nach Darstellung in Fig. 2 gedruckt.

**Patentansprüche**

1. Anordnung zur Aufbereitung von seriellen Rasterpunkt-Zeilen-Daten eines Bildschirmgerätes mit einer aus mehreren Rasterpunktzeilen bestehenden Bildfläche zur Ausgabe durch einen Matrixdrucker auf einen Aufzeichnungsträger, dadurch gekennzeichnet, dass der Matrixdrucker in an sich bekannter Weise einen Schreibkopf (17) mit einer linken und einer rechten Spalte mit jeweils äquidistant angeordneten Druckelementen (17) aufweist, wobei die Druckelementenspalten so gegeneinander versetzt sind, dass bei einem Aufzeichnungsvorgang, bei dem der Schreibkopf und der Aufzeichnungsträger relativ zueinander in einem zeilenförmigen Durchlauf bewegt werden, jedes Druckelement eine von p Punktrasterdruckzeilen mit je n Rasterpunkten druckt,
dass ein wahlfrei adressierbarer Speicher (62) zur Aufbereitung der Druckdaten vorgesehen ist,
dass der Speicher (62) in einen der linken Druckelementenspalte zugeordneten Bereich (63) und in einen der rechten Druckelementenspalte zugeordneten Bereich (64) aufgeteilt ist,
dass jeder Speicherbereich (63, 64) in aufeinanderfolgende Felder aufgeteilt ist, von denen jedes Feld einer Druckposition des Schreibkopfes auf dem Aufzeichnungsträger für einen Aufzeichnungs-Durchlauf zugeordnet ist,
dass jedes Bit eines Feldes einem bestimmten Druckelement zugeordnet ist,
dass nacheinander mikroprozessor- (20) und zählergesteuert (37, 47) aus jeder k-ten Bildschirmzeile (k = 1, 2, 3, 4 bis n) p Rasterpunkte ausgewählt und in ein Register (53 A, 53 B) mit p Stufen übertragen werden, wobei jede Registerstufe einem Druckelement zugeordnet ist, um so für jede der dem Schreibkopf für einen Aufzeichnungs-Durchlauf zugeordneten und später aufzuzeichnenden Punktrasterdruckzeilen die jeweils k.te Bit-Information zu bilden,
dass der Inhalt der Registerstufen taktgesteuert über Torschaltungen (54A, 54B) für jede Druckelementenspalte getrennt in die einzelnen Felder der Speicherbereiche (63, 64) übertragbar ist,
dass nach dem Laden der Speicherbereiche (63, 64) mit Druckdaten für einen Aufzeichnungs-Durchlauf für jede Druckposition die Druckdaten für die linke und rechte Druckelementenspalte aus den einer Druckposition entsprechenden Feldern der Speicherbereiche abrufbar sind,
und dass dieser Aufbereitungsvorgang für die jeweils nächsten p Rasterpunkte der Bildschirmzeilen wiederholbar ist, bis alle Bildschirmrasterpunkte abgedruckt sind.

2. Anordnung nach Anspruch 1, dadurch gekennzeichnet, dass bei einem Bildschirmzyklus mit Zeilenverschachtelung zunächst die geradzahligen (0, 2, 4, 6) und danach die ungeradzahligen Rasterpunkt-Zeilen (1, 3, 5, 7) übertragen werden.

3. Anordnung nach einem der Ansprüche 1 oder 2, dadurch gekennzeichnet, dass die Folge der das Bildschirmgerät steuernden Rasterpunktzeilen zur Druckdatenaufbereitung in Teilfolgen aufgeteilt ist.

4. Anordnung nach Anspruch 3, dadurch gekennzeichnet, dass in einer von zwei Teilfolgen immer nur die zweite Rasterpunktzeile aus der Folge der Darstellung aller Rasterpunktzeilen auf dem Bildschirmgerät für die Druckdatenaufbereitung erfasst wird.

Beispiel 1:

Zeilenfolge     0–1–2–3–4–5–6–7 . . . ;
Teilfolge       0–2–4–6 . . . ; 1–3–5–7 . . . ;

Beispiel 2:

Zeilenfolge     0–2–4–6–8–10 . . . ;
                 1–3–5–7–9–11 . . . ;

Teilfolgen      0–4–8 . . . ;
             2–6–10 . . . ;
             1–5–9 . . . ;
             3–7–11 . . .

5. Anordnung nach Anspruch 1, dadurch gekennzeichnet, dass das Register (53A, 53B) ein Schieberegister ist.

6. Anordnung nach einem der Ansprüche 1 bis 5, dadurch gekennzeichnet, dass bei zunächst unbekanntem Bildschirmformat die Punktzahl pro Rasterzeile und die Anzahl der Rasterpunktzeilen pro Bildschirm durch mikroprozessorgesteuerte Zählvorgänge ermittelt werden zur Festlegung des Formats der auszudruckenden Daten.

7. Anordnung nach Anspruch 1, dadurch gekennzeichnet, dass beim Laden der Druckdaten für die k.te Bit-Information der entsprechenden Punktrasterdruckzeilen die Speicheradressen der Felder in beiden Speicherbereichen (63, 64) um den Rasterpunkt-Abstand der Druckelementenspalten differieren.

8. Anordnung nach einem der Ansprüche 1 bis 7, dadurch gekennzeichnet, dass für einen bidirektionalen Druck die Felder der Speicherbereiche sowohl in aufsteigender als auch in absteigender Reihenfolge adressierbar sind.

9. Anordnung nach einem der Ansprüche 1 bis 8, dadurch gekennzeichnet, dass ein von einem Mikroprozessor ladbarer abwärtszählender Zähler (37) für die Punktzahl einer Rasterzeile sowie ein Zähler (47) für die Zählung der Punktrasterdruckzeilen für einen Aufzeichnungs-Durchlauf vorgesehen ist.

**Claims**

1. Apparatus for processing serial scan dot-line data of a display device with a screen consisting of several scan dot lines for recording by a matrix printer on a record carrier, characterized in that the matrix printer comprises, in a manner known per se, a print head (17) with a left-hand and a right-hand column with respectively equidistant print elements (17), the print element columns being staggered relative to each other in such a manner that in a recording process where the print head and the record carrier are moved relative to each other in a line pass each print element prints one of p dot scan print lines with n scan dots each,
that a randomly addressable memory (62) is provided to process the printing data,
that the memory (62) is divided into an area (63) associated to the left-hand print element column, and an area (64) associated to the right-hand print element column,
that each storage area (63, 64) is divided into successive fields, each field being associated to a print position of the print head on the record carrier for a recording pass,
that each bit of a field is associated to a predetermined print element,
that successively, with microprocessor (20) and counter control (37, 47), p scan dots are selected of each k-th screen line (k = 1, 2, 3, 4 to n) and transferred into a register (53A, 53B) with p stages, each register stage being associated to a print element in order to form, for each dot scan print line associated to the print head for a recording pass and to be recorded subsequently, the k-th bit information,
that the contents of the register stages are transferable separately under clock control via gates (54A, 54B) for each print element column into the individual fields of the storage areas (63, 64),
that following the loading of the storage areas (63, 64) with print data for a recording pass for each print position, the print data for the left-hand and right-hand print element column can be called up from the storage area fields corresponding to a print position, and
that this processing for the respective subsequent p scan dots of the screen lines can be repeated until all screen scan dots have been printed.

2. Apparatus as claimed in claim 1, characterized in that in a screen cycle with line odd/even nesting, first the even (0, 2, 4, 6) and subsequently the odd scan dot lines (1, 3, 5, 7) are transferred.

3. Apparatus as claimed in any one of claims 1 or 2, characterized in that the sequence of the scan dot lines controlling the display device is divided into segment sequences for print data processing.

4. Apparatus as claimed in claim 3, characterized in that in one of two segment sequences only the second scan dot line of the sequence of the display of all scan dot lines is considered for print data processing.

Example 1:
line sequence      0–1–2–3–4–5–6–7 ... ;
segment sequence      0–2–4–6 ... ; 1–3–5–7 ... ;

Exemple 2:
line sequence      0–2–4–6–8–10 ... ;
                   1–3–5–7–9–11 ... ;

segment sequence      0–4–8 ... ;
                   2–6–10 ... ;
                   1–5–9 ... ;
                   3–7–11 ...

5. Apparatus as claimed in claim 1, characterized in that the register (53A, 53B) is a shift register.

6. Apparatus as claimed in any one of claims 1 to 5, characterized in that for an initially unknown screen format the number of dots per scan line and the number of scan dot lines per screen are determined by microprocessor-controlled counting processes to fix the format of the data to be printed.

7. Apparatus as claimed in claim 1, characterized in that upon the loading of the print data for the k-th bit information of the corresponding scan dot print lines the storage addresses of the fields in both storage areas (63, 64) differ by the scan dot spacing of the print element columns.

8. Apparatus as claimed in any one of claims 1 to 7, characterized in that for bidirectional printing the fields of the storage areas are addressable in ascending as well as in descending order.

9. Apparatus as claimed in any one of claims 1 to 8, characterized in that a downward-counting counter (37) loadable by a microprocessor is provided for the number of dots of a scan line, as well as a counter (47) for counting the scan dot print lines for a recording pass.

**Revendications**

1. Dispositif pour préparer des données sérielles de lignes de trame d'une unité d'affichage comportant un affichage constituée de multiples lignes de points de trame pour obtenir un tirage sur un support d'impression au moyen d'une imprimante à matrice de point, caractérisé en ce que ladite imprimante à matrice de point comprend de façon connue en soi une tête d'impression (17) comportant une colonne gauche et une colonne droite d'éléments d'impression (17) respectivement équidistants, où les colonnes d'éléments d'impression sont décalées les unes par rapport aux autres de telle sorte que pour une opération d'impression où la tête d'impression et le support d'impression sont déplacés relativement l'un par rapport à l'autre selon un parcours d'une ligne, chaque élément d'impression imprime une ligne de p trames comportant chaque fois n points,

en ce qu'il est prévu une mémoire adressable à accès aléatoire (62) pour préparer des données d'impression,

en ce qu'une mémoire (62) est divisé en un premier domaine (63) auquel est associée la colonne gauche et un second domaine (64) auquel est associée la colonne droite,

en ce que chaque domaine (63, 64) est divisé en champs successifs où à chacun de ces champs est associée une position d'impression de ladite tête d'impression sur le support d'impression correspondant à un parcours d'impression,

en ce que chaque bit d'un champ est associé à un élément d'impression donné,

en ce que, sous la commande successivement d'un microprocesseur (20) et de compteurs (37, 47), p points de trame sont choisis dans chaque $k^{ième}$ ligne de l'affichage sur l'écran (k = 1, 2, 3, 4 à n) et transmis dans un registre (53A, 53B) comprenant p étages, chaque registre étant associé à un élément d'impression, de manière à élaborer l'information $k^{ième}$ de bits correspondant respectivement à chacune des lignes d'impression de trame associée à la tête d'impression pour un parcours d'impression et qui doit être imprimée, en ce que le contenu desdits étages de registre sous la commande synchronisée via les circuits de porte (54A, 54B) associés à chacune des colonnes d'éléments d'impression est transmissible séparément dans les différents champs des domaines de mémoire (63, 64),

en ce qu'une fois les données d'impression chargées dans les domaines de mémoire (63, 64), pour un parcours d'impression pour chaque position d'impression les données d'impression associées à la colonne des éléments gauche et à la colonne des éléments droite sont recherchées dans les champs des domaines de mémoire qui correspondent à une position d'impression, et en ce que l'opération de préparation est réitérée pour chacun des p points de trame suivants des lignes d'affichage jusqu'à impression de tous les points de trame d'affichage.

2. Dispositif selon la revendication 1, caractérisé en ce que, dans un cycle d'affichage de lignes imbriquées, les lignes de trame paires (0, 2, 4, 6) sont transmises en premier et les lignes impaires ensuite (1, 3, 5, 7).

3. Dispositif selon une des revendications 1 ou 2, caractérisé en ce que ladite séquence de lignes de trame qui commande l'unité d'affichage aux fins de la préparation des données pour impression est divisée en séquences complémentaires.

4. Dispositif selon la revendication 3, caractérisé en ce que, pour une de deux séquences complémentaires, seule la seconde ligne de trame est collectée dans la suite de l'affichage de toutes les lignes de trame sur écran afin d'être préparée pour impression.

Exemple 1:

Suite de lignes      0–1–2–3–4–5–6–7 ... ;
Suite partielle      0–2–4–6 ... ; 1–3–5–7 ... ;

Exemple 2:

| Suite de ligne | 0–2–4–6–8–10 . . .; |
| | 1–3–5–7–9–11 . . .; |
| Suite partielle | 0–4–8 . . . ; |
| | 2–6–10 . . .; |
| | 1–5–9 . . .; |
| | 3–7–11 . . . |

5. Dispositif selon la revendication 1, caractérisé en ce que ledit registre (53A, 53B) est un registre à décalage.   ·

6. Dispositif selon une des revendications 1 à 5, caractérisé en ce que, pour un format d'affichage en premier lieu inconnu, le nombre de points par ligne de trame et le nombre de lignes de trame par affichage sont déterminés au moyen d'opérations de comptage commandées à base d'un microprocesseur afin de définir le format des données à imprimer.

7. Dispositif selon la revendication 1, caractérisé en ce que lors du chargement des données d'impression d'une information $k^{ième}$ de bits contenus dans les lignes de trame correspondantes, les adresses de mémoire des champs dans les deux domaines de la mémoire (63, 64) varient en fonction de la distance entre les points de trame des colonnes d'éléments d'impression.

8. Dispositif selon une des revendications 1 à 7, caractérisé en ce que pour une impression dans les deux sens, les champs dans les domaines de la mémoire sont adressés aussi bien dans un ordre progressif que dégressif.

9. Dispositif selon une des revendications 1 à 8, caractérisé en ce qu'il est prévu un compteur (37) à comptage dégressif, initié par le microprocesseur, pour déterminer le nombre de points dans une ligne de trame, et un compteur (47) pour compter le nombre de lignes d'impression de trame correspondant à un parcours d'impression.

0 066 728

**FIG. 1**

12

0
2
4
6
8

10

11

○ VIDEO DATEN-25
○ VIDEO BIT TAKT-26
○ HORIZ. SYNC-27
○ VERT. SYNC-28
○ UNG./GER.ZEILE-29
○ NORMAL/RÜCKW. BILD-30

19a  19b  19c

19a
19b
19c

18

13
17

16
15
15
14
15

**FIG. 2**

11

FIG. 3

FIG. 4